# EUROPÄISCHE PATENTSCHRIFT

(11) **EP 3 455 303 B1**
(45) Veröffentlichungstag und Bekanntmachung des Hinweises auf die Patenterteilung: **05.08.2020**
(21) Anmeldenummer: 17723971.2
(22) Anmeldetag: 09.05.2017
(51) Int. Cl.: C09D 5/08, C23C 18/20, C23C 18/16, C23C 18/44, B32B 27/00, B05D 5/06, C23C 18/28, B05D 7/00

(54) **VERFAHREN ZUR BEREITSTELLUNG EINER METALLISCH SPIEGELNDEN, HOCHGLÄNZENDEN OBERFLÄCHE AUF EINEM SUBSTRAT UND MITTELS DES VERFAHRENS HERGESTELLTES SCHICHTSYSTEM**
METHOD FOR PROVIDING A METALLICALLY REFLECTIVE, HIGH-GLOSS SURFACE ON A SUBSTRATE AND LAYER SYSTEM PRODUCED USING SAID METHOD
PROCÉDÉ POUR LA RÉALISATION D'UNE SURFACE HAUTEMENT BRILLANTE, À REFLET MÉTALLIQUE SUR UN SUBSTRAT ET SYSTÈME À COUCHES FABRIQUÉ AU MOYEN DU PROCÉDÉ

(30) Priorität: 10.05.2016 DE 102016208046
(43) Veröffentlichungstag der Anmeldung: 20.03.2019
(73) Patentinhaber: Karl Wörwag Lack- Und Farbenfabrik GmbH & Co. KG, 70435 Stuttgart (DE)
(72) Erfinder: SCHMIDTCHEN, Markus, 74821 Mosbach (DE); ORTMEIER, Jürgen, 73230 Kirchheim (DE); KALTENBACH, Michael, 75382 Althengstett (DE)
(74) Vertreter: Patentanwaltskanzlei Cartagena
(86) Internationale Anmeldenummer: PCT/EP2017/061075
(87) Internationale Veröffentlichungsnummer: WO 2017/194547

(56) Entgegenhaltungen:
- WO-A2-01/87501
- JP-A- 2007 169 685
- US-B1- 6 773 757
- Anonymous: "Thieme RÖMPP Isophorondiisocyanat", , 31. Dezember 2007 (2007-12-31), XP055386880, Gefunden im Internet: URL:https://roempp.thieme.de/roempp4.0/do/ data/RD-09-01679 [gefunden am 2017-06-30]

## Beschreibung

Die Erfindung betrifft ein Verfahren zur Bereitstellung einer metallisch spiegelnden, hochglänzenden Oberfläche auf einem Substrat, bei dem eine Silberschicht auf dem Substrat gebildet wird, indem eine Silbersalzlösung mit einem Reduktionsmittel gemischt wird. Des Weiteren betrifft die Erfindung ein Schichtsystem mit mehreren Schichten sowie ein lackiertes Substrat mit dem Schichtsystem.

Die Beschichtung von Oberflächen von Substraten kann aus vielerlei Gründen sinnvoll sein, beispielsweise zum Schutz der Oberflächen, zum Verändern ihrer physikalischen Eigenschaften (beispielsweise ihrer Leitfähigkeit), aus dekorativen Gründen (Erzeugen eines Spiegeleffekts) oder zur Verbesserung der strukturellen Integrität der Substrate. Insgesamt ist daher das Interesse an Verfahren, mit welchen ein möglichst breites Spektrum an verschiedenen Substraten beschichtet werden kann, sehr hoch. Von besonderer Bedeutung ist die Beschichtung von Kunststoffen, wobei als Substrate grundsätzlich auch Holz-, Glas- und Metallsubstrate in Frage kommen.

Ein bekanntes Verfahren zur Herstellung verspiegelter Oberflächen ist die sogenannte Spritz- oder Sprühmetallisierung (auch bekannt als "chemisches Spritzverfahren" oder "CSV-Verfahren"). Hierbei wird im Spritzverfahren auf einem Substrat eine Silberschicht abgeschieden, wobei meist eine Zweikomponenten-Sprühpistole zum Einsatz kommt, bei der aus zwei getrennten Düsen eine Silbersalzlösung und eine Reduktionslösung austreten. Sobald sich die Lösungen vermischen, reduziert die Reduktionslösung das in der Salzlösung enthaltene Silbersalz und metallisches Silber fällt aus. Das ausgefallene Silber lagert sich auf dem Substrat an und bildet die gewünschte verspiegelte Oberfläche. Nach Reinigen und Trocknen der verspiegelten Oberfläche wird in der Regel ein transparenter oder transluzenter Schutzlack aufgetragen.

Aus der JP 2007-169685 A ist es bekannt, auf eine Oberfläche eine Primer-Zusammensetzung mit Benzotriazol als Korrosionsschutzmittel zuzusetzen und die Oberfläche metallisch zu verspiegeln.

Besonderer Bedarf an verspiegelten Oberflächen besteht im Automobil- und Motorradbereich. In diesen Bereichen sind die Anforderungen an die Qualität der verspiegelten Oberflächen jedoch sehr hoch, da Automobile und Motorräder in hohem Maß der Witterung und mechanischen Belastungen ausgesetzt sind. Beispielsweise durch Steinschlag kann der transparente oder transluzente Schutzlack auf einer mittels Sprühmetallisierung hergestellten Silberschicht leicht verletzt werden. In der Folge ist die unter dem Schutzlack angeordnete Silberschicht Witterungseinflüssen zugänglich. Unter korrosiven Bedingungen kann es zu einer schnellen Zersetzung der Silberschicht und damit zu einer Schädigung des optischen Gesamteindrucks der verspiegelten Oberfläche kommen. Mittels Sprühmetallisierung hergestellte verspiegelte Oberflächen eignen sich daher allenfalls bedingt für den Einsatz im Automobil- und Motorradbereich.

Zur Erhöhung der Korrosionsstabilität von mittels Sprühmetallisierung hergestellten Silberschichten kann man Substrate vor dem Auftrag der Silberschicht mit einem Zinkpartikel enthaltenden Lack grundieren. Die Zinkpartikel bilden mit der Silberschicht ein Lokalelement und fungieren als Opferanode. Korrosive Effekte wirken hierdurch auf die Silberschicht allenfalls verzögert. Allerdings müssen die Zinkpartikel in der Grundierung in einem sehr hohen Anteil enthalten sein. Ein hoher Anteil an Zinkpartikeln in der Grundierung hat negative Auswirkungen auf die Oberflächenglätte des grundierten Substrats. Eine verringerte Oberflächenglätte hat wiederum zur Folge, dass die nachfolgend aufgetragene Silberschicht lediglich einen matten Glanz aufweist. Hochglanzoberflächen lassen sich auf diesem Weg nicht realisieren.

Der vorliegenden Erfindung lag die Aufgabe zugrunde, verspiegelte, hochglänzende Oberflächen bereitzustellen, die weniger anfällig gegenüber mechanischen und korrosiven Belastungen sind und die sich auch für den Einsatz im Automobil- und Motorradbereich eignen.

Erfindungsgemäß wird die vorstehende Aufgabe durch ein Verfahren mit den Merkmalen von Anspruch 1 gelöst. Bevorzugte Ausführungsformen des erfindungsgemäßen Verfahrens sind in den abhängigen Ansprüchen 2 bis 9 definiert. Von der Erfindung umfasst ist weiterhin das Schichtsystem nach Anspruch 10. Der Wortlaut sämtlicher Ansprüche wird hiermit durch Bezugnahme zum Inhalt dieser Beschreibung gemacht.

Das erfindungsgemäße Verfahren folgt in Teilschritten dem Stand der Technik. So wird zur Bereitstellung einer metallisch spiegelnden Oberfläche eine Silberschicht auf einem Substrat gebildet. Hierzu werden eine Silbersalzlösung und ein Reduktionsmittel vermischt und vor, nach oder während des Vermischens auf das Substrat aufgesprüht. Bei der Bildung der Silberschicht kann z.B. die eingangs erwähnte Sprühpistole zum Einsatz kommen. Auf die gebildete Silberschicht wird mindestens eine transparente oder transluzente Decklackschicht, vorzugsweise mindestens eine Klarlackschicht, aufgebracht.

In einem vorgeschalteten Schritt wird auf das Substrat allerdings eine Schicht aus einem Primer (kurz: Primerschicht) aufgebracht, der ein Korrosionsschutzmittel enthält, welches ausgewählt ist aus der Gruppe umfassend Benzotriazol, Tolyltriazol (Methyl-1H-benzotriazol) und Benzimidazol und Mischungen aus zwei oder mehr der genannten Verbindungen. Die Silberschicht wird nicht unmittelbar auf dem Substrat gebildet sondern auf der Schicht aus dem Primer.

Besonders bevorzugt enthält der Primer als Korrosionsschutzmittel Tolytriazol.

Ein Primer (auch bekannt als Grundierung oder Voranstrich) dient bekanntlich primär dazu, die Haftbedingungen für eine nachfolgende Schicht zu verbessern. Vorliegend dient die Schicht jedoch auch dazu, die Resistenz einer nachfolgenden Schicht, nämlich der Silberschicht, gegenüber optischen Schädigungen in Folge von mechanischen und korrosiven Belastungen zu verbessern. Dies gelingt mit überraschend hoher Effizienz und ohne eine Verschlechterung der Oberflächenglätte des grundierten Substrats, anders als mit der Zinkpartikel enthaltenden Grundierung. Von Bedeutung ist dies auch insoweit, als zur Herstellung einer hochglänzenden und spiegelnden Oberfläche der Glanzwert der Primerschicht bei 20° nach DIN 67530 (ISO 2813) einen Messwert > 70 GU (GU = Glanzeinheiten bzw. "gloss units"), bevorzugt > 80 GU, erreichen muss. Gemäß dem erfindungsgemäßen Verfahren lassen sich somit auch verspiegelte, hochglänzende Oberflächen bereitstellen.

Das erfindungsgemäße Verfahren dient zur Bereitstellung von verspiegelten, hochglänzenden Oberflächen, bei denen bei einer Bestimmung des Glanzwerts bei 20° nach DIN 67530 (ISO 2813) ein Messwert > 70GU (GU = Glanzeinheiten bzw. "gloss units"), bevorzugt > 80 GU, erreicht wird. Korrosionsstabile Oberflächen mit einem solch hohen Glanzgrad lassen sich nach klassischen Verfahren nicht herstellen, sehr wohl jedoch, wenn eine Primerschicht mit den genannten Glanzwerten unter eine Silberschicht gelegt wird.

In einer besonders bevorzugten Ausführungsform des erfindungsgemäßen Verfahrens ist es vorgesehen, dass das Korrosionsschutzmittel im Primer in einem Anteil im Bereich von 0,1 Gew.-% bis 20 Gew.-%, bevorzugt von 1 Gew.-% bis 10 Gew.-%, besonders bevorzugt von 1 Gew.-% bis 5 Gew.-%, enthalten ist (alle Prozentangaben sind bezogen auf die Gesamtmasse des Primers einschließlich gegebenenfalls enthaltenem Lösungsmittel).

Es ist erfindungsgemäß bevorzugt, dass der Primer ein hydroxyfunktionelles Harz und einen isocyanatfunktionellen Härter umfasst. Besonders bevorzugt handelt es sich bei dem isocyanatfunktionellen Härter um einen IPDI-basierten Härter (IPDI = Isophorondiisocyanat).

Alternativ zu dem hydroxyfunktionellen Harz und dem isocyanatfunktionellen Härter oder zusätzlich zu diesen kann der Primer auch einen Anteil an mindestens einem Acrylharz umfassen.

Bei der verwendeten Silbersalzlösung handelt es sich bevorzugt um eine wässrige Lösung, insbesondere um eine wässrige alkalische Lösung. Bevorzugt enthält die Lösung mindestens ein Silbersalz aus der Gruppe mit Silbernitrat, Silberchlorid, Silberacetat, Silberlactat und Silbersulfat.

In bevorzugten Ausführungsformen kann die Silbersalzlösung zur Verhinderung des frühzeitigen Ausfällens bzw. Ausfallens von Silber mit einer ammoniakalischen Lösung versetzt sein, wodurch die Bildung von Silberdiaminkomplexen ([Ag(NH₃)₂]²⁺) ausgelöst wird.

Bei dem verwendeten Reduktionsmittel handelt es sich bevorzugt um eine wässrige Lösung, die ein reduzierendes Agens enthält. Als reduzierendes Agens finden bevorzugt Verbindungen aus den Stoffklassen der Aldehyde, Zucker oder Alkohole entweder in reiner Form oder in beliebigen Mischungen Verwendung.

Besonders bevorzugt ist das Agens mindestens ein Agens aus der Gruppe mit Glukose, Laktose, Methanal, Ethanal, Propanal, Butanal, Pentanal, Hexanal, Heptanal, Octanal, Nonanal, Decanal, Methanol, Ethanol, Derivate der genannten Verbindungen und Mischungen aus zwei oder mehr der genannten Verbindungen und/oder Derivate.

Bei dem Substrat, auf das die metallisch spiegelnde Oberfläche aufgebracht wird, handelt es sich bevorzugt um ein Kunststoffteil, insbesondere um ein Teil aus Acrylnitril-Butadien-Styrol (ABS), aus glasfaserverstärktem Kunststoff (GFK), aus Polyamid (PA), aus Polycarbonat (PC), aus Polybutylenterephthalat (PBT), aus Polyethylen (PE), aus Polypropylen (PP) oder aus Polyurethan (PUR), besonders bevorzugt aus PP/EPDM (Polypropylen/Ethylen-Propylen-Dien-Kautschuk Blend) oder aus einem PP-Copolymer.

Bevorzugt wird die Oberfläche des Substrats vor dem Aufbringen des Primers gereinigt und/oder vorbehandelt. Die Vorbehandlung kann beispielsweise eine Behandlung mit Fluor, mit einem Plasma oder ein Beflammen umfassen. Häufig wird die Oberfläche auch angeschliffen. Die Reinigung kann aber auch manuell durch Abwischen mit Lösemitteln mit oder ohne vorheriges Schleifen erfolgen oder mittels gängiger automatisierter Verfahren, wie Powerwash oder CO2-Reinigung.

In bevorzugten Ausführungsformen wird nach dem Auftrag des Primers, bevorzugt unmittelbar vor der Bildung der Silberschicht, mindestens einer der folgenden Schritte durchgeführt: a) Trocknung und/oder mindestens teilweise Härtung des Primers, b) Aktivierung der Primerschicht, c) Spülen, bevorzugt mit deionisiertem Wasser.

Zur Aktivierung der Primerschicht wird beispielsweise als Aktivierungsmittel Zinn-II-Chlorid (SnCl2) verwendet.

Nach der Bildung der metallischen Schicht aus Silber weist das Verfahren mindestens einen der folgenden Schritte auf: a) Spülen, bevorzugt mit deionisiertem Wasser, b) Trocknung der Silberschicht.

Wie oben bereits erwähnt, wird die Silberschicht erfindungsgemäß mit mindestens einer transparenten oder transluzenten Decklackschicht abgedeckt, besonders bevorzugt mit mindestens einer Klarlackschicht. Klarlacke sind transparente Lacke, die meist ausschließlich aus Bindemittel und Lösungsmittel (neben üblichen Lackadditiven) bestehen, also keine Füllstoffe oder deckende Pigmente enthalten.

Die mindestens eine transparente oder transluzente Decklackschicht wird aus mindestens einer Beschichtungszusammensetzung umfassend ein hydroxyfunktionelles Harz und einen isocyanatfunktionellen Härter gebildet.

Dabei wird
(1) die transparente oder transluzente Decklackschicht aus einer Beschichtungszusammensetzung umfassend ein hydroxyfunktionelles Harz und einen isocyanatfunktionellen Härter gebildet, wobei es sich bei dem Härter um einen IPDI-basierten Härter handelt,
   oder
(2) die transparente oder transluzente Decklackschicht wird aus zwei Beschichtungszusammensetzungen, jeweils umfassend ein hydroxyfunktionelles Harz und einen isocyanatfunktionellen Härter, gebildet, wobei es sich bei dem Härter in einer der Beschichtungszusammensetzungen um einen IPDI-basierten Härter und bei dem Härter in der anderen der zwei Beschichtungszusammensetzungen um einen HDI-basierten Härter (HDI = Hexamethylen-1,6-diisocyanat) handelt.

Im Fall (2) ist es bevorzugt, dass unmittelbar auf die Silberschicht eine erste transparente oder transluzente Lage aus der Beschichtungszusammensetzung mit dem IPDI-basierten Härter aufgetragen wird. Darauf wird anschließend unter Verwendung der Beschichtungszusammensetzung mit dem HDI-basierten Härter eine zweite transparente oder transluzente Lage gebildet, die zusammen mit der ersten transparenten oder transluzenten Lage die transparente oder transluzente Decklackschicht bildet.

Alle Beschichtungszusammensetzungen zur Herstellung der transparenten oder transluzenten Decklackschicht können auch einen Anteil an mindestens einem Acrylharz umfassen.

In besonders bevorzugten Ausführungsformen enthält auch mindestens eine der Beschichtungszusammensetzungen zur Bildung der Decklackschicht, insbesondere die Zusammensetzung, die unmittelbar auf die Silberschicht aufgetragen werden, mindestens eines der Korrosionsschutzmittel, die im Primer enthalten sein können. Tolyltriazol ist als Korrosionsschutzmittel auch hier besonders bevorzugt.

Bevorzugt ist das Korrosionsschutzmittel in der Beschichtungszusammensetzung zur Bildung der Decklackschicht,in einem Anteil im Bereich von 0,1 Gew.-% bis 20 Gew.-%, bevorzugt von 1 Gew.-% bis 10 Gew.-%, besonders bevorzugt von 1 Gew.-% bis 5 Gew.-%, enthalten (alle Prozentangaben sind auch hier bezogen auf die Gesamtmasse der Beschichtungszusammensetzung einschließlich gegebenenfalls enthaltenem Lösungsmittel).

Das erfindungsgemäße Schichtsystem ist auf einem Substrat angeordnet und umfasst eine unmittelbar auf einem Substrat angeordnete Primerschicht, eine Silberschicht unmittelbar auf der Primerschicht und eine Decklackschicht unmittelbar auf der Silberschicht. Die Primerschicht und gegebenenfalls auch die Decklackschicht enthalten mindestens eines der genannten Korrosionsschutzmittel aus der Gruppe mit Benzotriazol, Tolyltriazol und Benzimidazol.

In Übereinstimmung mit obigen Ausführungen bildet das Schichtsystem eine verspiegelte Oberfläche des Substrats, welche Hochglanzeigenschaften aufweist. Bei einer Bestimmung des Glanzwerts der Oberfläche bei 20 ° nach DIN 67530 (ISO 2813) wird in aller Regel ein Messwert > 80 GU (GU = Glanzeinheiten bzw. "gloss units") erreicht.

Das Schichtsystem ist mittels des erfindungsgemäßen Verfahrens herstellbar. Zahlreiche Merkmale der Primerschicht, der Silberschicht und der Decklackschicht lassen sich entsprechend aus obigen Ausführungen ableiten. So handelt es sich etwa bei der Primer- und der Decklackschicht bevorzugt um Polyurethanlackschichten, die aus den genannten hydroxy- und isocyanatfunktionellen Komponenten gebildet sind.

Die Decklackschicht kann aus einer transparenten oder transluzenten Lage oder aus zwei oder mehr transparenten oder transluzenten Lagen bestehen.

Die Dicke der Silberschicht liegt bevorzugt im Bereich von 50 nm bis 200 nm.

Die Dicke der Primerschicht liegt bevorzugt im Bereich von 10 µm bis 100 µm, bevorzugt im Bereich von 20 µm bis 40 µm.

Die Dicke der Decklackschicht liegt bevorzugt im Bereich von 10 µm bis 100 µm, bevorzugt im Bereich von 25 µm bis 45 µm.

Weitere Merkmale der Erfindung sowie aus der Erfindung resultierende Vorteile ergeben sich aus den nachfolgenden Ausführungsbeispielen, anhand derer die Erfindung erläutert wird. Die nachfolgend beschriebene Ausführungsform dient lediglich zur Erläuterung und zum besseren Verständnis der Erfindung und ist in keiner Weise einschränkend zu verstehen.

### Ausführungsbeispiele

(1) Ein Plastiksubstrat aus Acrylnitril-Butadien-Styrol (ABS) sollte mit einer metallisch spiegelnden Oberfläche versehen werden. Hierzu wurde das Substrat zunächst mit einem Isopropanol-Wasser-Gemisch gereinigt und anschließend mittels Plasmabehandlung aktiviert. Anschließend wurde ein Primer bereitgestellt und auf das Plastiksubstrat aufgebracht. Bei dem Primer handelte es sich um einen 2-Komponenten-Klarlack auf Basis einer hydroxyfunktionellen Harzmischung und eines isocyanatfunktionellen Härters. Die hydroxyfunktionelle Harzmischung wies die folgende Zusammensetzung auf:

| Gewichtsteile | Komponente |
|---|---|
| 0,17 | Acrylat Copolymer |
| 33,548 | Acrylharzkomponente |
| 18,082 | Polyesterpolyolkomponente als hydroxyfunktionelles Harz |
| 0,037 | Fettsäuren, C6-C19 verzweigt, Zinksalze |
| 1,732 | Methyl-1H-benzotriazol |
| 2,544 | Xylol |
| 17,243 | n-Butylacetat |
| 10,145 | Lösungsmittelnaphtha (Erdöl) |
| 0,676 | Ethylbenzol |
| 15,574 | 1-Methoxypropylacetat-2 |

Als Korrosionsschutzmittel enthielt die Zusammensetzung Benzotriazol. Als isocyanatfunktioneller Härter wurde ein Härter basierend auf Isophorondiisocyanat (IPDI) verwendet.
Der Härter und die hydroxyfunktionelle Harzmischung wurden gemischt (im Verhältnis 3:1) und auf das Substrat aufgesprüht. Anschließend wurde das mit Primer versehene Plastiksubstrat getrocknet. Zur Aktivierung der Primerschicht wurde die Schicht zunächst beflammt. Dann wurde ein Aktivator aufgebracht (eine Lösung von Zinn(II)-chlorid mit einer Konzentration von 0,5 Gew.-%) um daran anschließend das Plastiksubstrat erneut mit deionisiertem Wasser zu spülen.
Zur Aufbringung einer Silberschicht wurden eine Metallsalzlösung (wässrige Silbernitratlösung) und ein Reduktionsmittel (wässrige Formaldehydlösung) bereitgestellt. Die Lösungen wurden mittels einer Sprühpistole vermischt und auf das mit der aktivierten Primerschicht versehene Plastiksubstrat aufgesprüht. Das Substrat mit der abgeschiedenen Silberschicht wurde dann gespült und trocken geblasen.
Anschließend wurde auf die Silberschicht eine Lage aus einem transparenten Decklack aufgebracht. Bei dem Decklack handelte es sich um einen 2-Komponenten-Klarlack auf Basis einer hydroxyfunktionellen Harzmischung und eines isocyanatfunktionellen Härters. Als Härter wurde wiederum IPDI verwendet. Die hydroxyfunktionelle Harzmischung wies die folgende Zusammensetzung auf:

| Gewichtsteile | Komponente |
|---|---|
| 0,147 | Acrylat Copolymer |
| 17,731 | Acrylharzkomponente |
| 29,801 | Polyesterolyolkomponente als hydroxyfunktionelles Harz |
| 12,93 | Polyesterharz |
| 0,01 | Diazabicyclooctan |
| 0,002 | 2-Methoxypropylacetat |
| 7,014 | Xylol |
| 0,001 | Benzol |
| 9,442 | n-Butylacetat |
| 0,127 | Aceton |
| 15,440 | Lösungsmittelnaphtha (Erdöl) |
| 1,399 | Ethylbenzol |
| 1,423 | 1-Methoxypropylacetat-2 |
| 0,068 | Dipropylenglykoldimethylether |
| 0,152 | 2-Phenoxyethanol |
| 0,021 | Dipropylenglykol |
| 0,344 | 1-Methoxy-2-Propanol |
| 0,001 | 2-Methoxy-1-propanol |
| 0,012 | 1,2,4-Trimethylbenzene |
| 01012 | Dioctylzinndilaurat |
| 0,009 | Benzoguanamin-Formaldehydharz, butyliert |
| 1,02 | Hydroxyphenyl-s-triazine derivative |
| 0,84 | 2-Aminoethanol-Derivat |
| 0,1 | Polydimethylsiloxan |
| 1,955 | Oxiran |

Die hydroxyfunktionelle Harzmischung und der Härter wurden vor Applikation im Verhältnis 3:1 vermischt.
Abschließend wurde auf die Lage aus dem transparenten Decklack eine Lage aus einem handelsüblichen Klarlack aufgebracht, getrocknet und gehärtet. Die beiden Lagen bildeten gemeinsam eine Decklackschicht auf der Silberschicht aus.
(2) Analog zu (1) wurde ein Plastiksubstrat aus Acrylnitril-Butadien-Styrol (ABS) mit einer metallisch spiegelnden Oberfläche und einer Decklackschicht versehen. Der einzige Unterschied zu (1): Das zur Bildung der Primerschicht verwendete hydroxyfunktionelle Harz enthielt kein Benzotriazol und auch kein anderes gleichwertiges Korrosionsschutzmittel.
(3) Analog zu (1) wurde ein Plastiksubstrat aus Acrylnitril-Butadien-Styrol (ABS) mit einer metallisch spiegelnden Oberfläche und einer Decklackschicht versehen. Der einzige Unterschied zu (1): An Stelle des IPDI-basierten Härters wurde zur Herstellung der Decklackschicht ein Härter basierend auf Hexamethylendiisocyanat (HDI) verwendet.

Gemäß (1) und (3) beschichtete Objekte wiesen in Tests eine deutlich höhere Korrosionsbeständigkeit auf als gemäß (2) beschichtete Objekte (240 h Salzsprühtest mit max. 1 mm Unterwanderung am Ritz sind erfüllt). Gemäß (3) beschichtete Objekte wiesen im Mittel geringere Glanzwerte (bestimmt bei 20° nach DIN 67530 (ISO 2813)) auf als gemäß (1) beschichtete Objekte.

## Patentansprüche

1. Verfahren zur Bereitstellung einer metallisch spiegelnden Oberfläche auf einem Substrat, wobei zur Herstellung der metallisch spiegelnden Oberfläche
• auf das Substrat eine Schicht aus einem Primer aufgebracht wird,
• zwecks Bildung einer Silberschicht eine Silbersalzlösung mit einem Reduktionsmittel gemischt und auf die Primerschicht aufgesprüht wird, und
• unmittelbar auf die Silberschicht mindestens eine transparente oder transluzente Decklackschicht, vorzugsweise mindestens eine Klarlackschicht, aufgebracht wird,
wobei der Primer ein Korrosionsschutzmittel enthält, welches ausgewählt ist aus der Gruppe umfassend Benzotriazol, Tolyltriazol, Benzimidazol und Mischungen aus zwei oder mehr der genannten Verbindungen ,
**dadurch gekennzeichnet, dass**
die mindestens eine transparente oder transluzente Decklackschicht aus mindestens einer Beschichtungszusammensetzung umfassend ein hydroxyfunktionelles Harz und einen Härter, der auf Isophorondiisocyanat basiert, gebildet wird.

2. Verfahren nach Anspruch 1, **dadurch gekennzeichnet, dass** das Korrosionsschutzmittel im Primer in einem Anteil im Bereich von 0,1 Gew.-% bis 20 Gew.-%, bevorzugt von 1 Gew.-% bis 10 Gew.-%, besonders bevorzugt von 1 Gew.-% bis 5 Gew.-%, enthalten ist, wobei die Prozentangaben jeweils auf die Gesamtmasse des Primers bezogen sind.

3. Verfahren nach Anspruch 1 oder Anspruch 2, **dadurch gekennzeichnet, dass** der Primer ein hydroxyfunktionelles Harz und einen isocyanatfunktionellen Härter umfasst.

4. Verfahren nach einem der vorhergehenden Ansprüche, **dadurch gekennzeichnet, dass** die Silbersalzlösung
• eine wässrige Lösung, insbesondere eine wässrige alkalische Lösung, ist,
• und/oder
• mindestens ein Salz aus der Gruppe mit Silbernitrat, Silberchlorid, Silberacetat, Silberlactat und Silbersulfat enthält.

5. Verfahren nach einem der vorhergehenden Ansprüche, **dadurch gekennzeichnet, dass** das Reduktionsmittel eine wässrige Lösung mit einem reduzierenden Agens ist und das Agens eine reduzierende Verbindung aus den Stoffklassen der Aldehyde, Zucker oder Alkohole ist.

6. Verfahren nach einem der vorhergehenden Ansprüche, **dadurch gekennzeichnet, dass** es sich bei dem Substrat um ein Kunststoffteil handelt, insbesondere um ein Teil aus Acrylnitril-Butadien-Styrol oder aus Polypropylen/Ethylen-Propylen-Dien-Kautschuk Blend.

7. Verfahren nach einem der vorhergehenden Ansprüche, **dadurch gekennzeichnet, dass** die Oberfläche des Substrats vor dem Aufbringen des Primers gereinigt und/oder vorbehandelt wird.

8. Verfahren nach einem der vorhergehenden Ansprüche, **dadurch gekennzeichnet, dass** nach dem Auftrag des Primers das Verfahren mindestens einen der folgenden Schritte umfasst:
a. Trocknung und/oder mindestens teilweise Härtung des Primers,
b. Aktivierung der Primerschicht,
c. Spülen, bevorzugt mit deionisiertem Wasser.

9. Verfahren nach einem der vorhergehenden Ansprüche, **dadurch gekennzeichnet, dass** nach dem Auftrag der metallisierten Schicht aus Silber das Verfahren mindestens einen der folgenden Schritte aufweist:
a. Spülen, bevorzugt mit deionisiertem Wasser,
b. Trocknung der Silberschicht.

10. Schichtsystem auf einem Substrat, die nach nach einem Verfahren nach einem der Ansprüche 1 bis 9 herstellbar ist, umfassend eine Primerschicht unmittelbar auf dem Substrat, eine Silberschicht unmittelbar auf der Primerschicht und eine Decklackschicht unmittelbar auf der Silberschicht, wobei die Primerschicht ein Korrosionsschutzmittel enthält, welches ausgewählt ist aus der Gruppe umfassend Benzotriazol, Tolyltriazol, Benzimidazol und Mischungen aus zwei oder mehr der genannten Verbindungen,
**dadurch gekennzeichnet, dass**
die Decklackschicht eine Polyurethanlackschicht ist, die mit Hilfe eines Härters, der auf Isophorondiisocyanat basiert, gebildet wurde.

## Claims

1. Method for providing a metallically reflective surface on a substrate, the metallically reflective surface being produced by
• applying a layer of a primer to the substrate,
• to form a silver layer, mixing a silver salt solution with a reductant and spraying it onto the primer layer, and
• applying, directly to the silver layer, at least one transparent or translucent topcoat layer, preferably at least one clearcoat layer,
wherein the primer comprises a corrosion inhibitor which is selected from the group comprising benzotriazole, tolyltriazole, benzimidazole and mixtures of two or more of these compounds,
**characterized in that**
the at least one transparent or translucent topcoat layer is formed from at least one coating composition comprising a hydroxy-functional resin and a curing agent based on isophorone diisocyanate.

2. Method according to Claim 1, **characterized in that** the corrosion inhibitor is included in the primer in a fraction in the range from 0.1 wt% to 20 wt%, preferably from 1 wt% to 10 wt%, more preferably from 1 wt% to 5 wt%, the percentages being based in each case on the overall mass of the primer.

3. Method according to Claim 1 or Claim 2, **characterized in that** the primer comprises a hydroxy-functional resin and an isocyanate-functional curing agent.

4. Method according to any of the preceding claims, **characterized in that** the silver salt solution
• is an aqueous solution, more particularly an aqueous alkaline solution,
• and/or
• comprises at least one salt from the group including silver nitrate, silver chloride, silver acetate, silver lactate and silver sulfate.

5. Method according to any of the preceding claims, **characterized in that** the reductant is an aqueous solution with a reducing agent and the agent is a reducing compound from the classes of the aldehydes, sugars or alcohols.

6. Method according to any of the preceding claims, **characterized in that** the substrate is a plastics part, more particularly a part made of acrylonitrile-butadiene-styrene or of polypropylene/ethylene-propylene-diene rubber blend.

7. Method according to any of the preceding claims, **characterized in that** the surface of the substrate is cleaned and/or pretreated before application of the primer.

8. Method according to any of the preceding claims, **characterized in that** after application of the primer, the method comprises at least one of the following steps:
a. drying and/or at least partly curing the primer,
b. activating the primer layer,
c. rinsing, preferably with deionized water.

9. Method according to any of the preceding claims, **characterized in that** after application of the metallicized layer of silver, the method comprises at least one of the following steps:
a. rinsing, preferably with deionized water,
b. drying the silver layer.

10. Layer system on a substrate, which is producible by a method according to any of Claims 1 to 9, comprising a primer layer directly on the substrate, a silver layer directly on the primer layer, and a topcoat layer directly on the silver layer, wherein the primer layer comprises a corrosion inhibitor which is selected from the group comprising benzotriazole, tolyltriazole, benzimidazole and mixtures of two or more of these compounds,
**characterized in that**
the topcoat layer is a polyurethane coating layer formed using a curing agent based on isophorone diisocyanate.

## Revendications

1. Procédé pour la réalisation d'une surface à reflets métalliques sur un substrat, dans lequel, pour la fabrication de la surface à reflets métalliques,
- une couche d'un apprêt est appliquée sur le substrat,
- en vue de la formation d'une couche d'argent, une solution de sel d'argent est mélangée à un réducteur et pulvérisée sur la couche d'apprêt et
- au moins une couche de laque de recouvrement transparente ou translucide, de préférence au moins une couche de laque claire, est appliquée directement sur la couche d'argent,
l'apprêt contenant un agent de protection contre la corrosion qui est choisi dans le groupe comprenant le benzotriazole, le toluyltriazole, le benzimidazole et les mélanges de deux, ou plus, des composés mentionnés, **caractérisé en ce que** ladite au moins une couche de laque de recouvrement transparente ou translucide est formée à partir d'au moins une composition de revêtement comprenant une résine à fonctionnalité hydroxy et un durcisseur à base de diisocyanate d'isophorone.

2. Procédé selon la revendication 1, **caractérisé en ce que** l'agent de protection contre la corrosion est contenu dans l'apprêt en une proportion dans la plage de 0,1% en poids à 20% en poids, de préférence de 1% en poids à 10% en poids, de manière particulièrement préférée de 1% en poids à 5% en poids, les indications de pourcentage se rapportant à chaque fois à la masse totale de l'apprêt.

3. Procédé selon la revendication 1 ou la revendication 2, **caractérisé en ce que** l'apprêt comprend une résine à fonctionnalité hydroxy et un durcisseur à fonctionnalité diisocyanate.

4. Procédé selon l'une quelconque des revendications précédentes, **caractérisé en ce que** la solution de sel d'argent
- est une solution aqueuse, en particulier une solution aqueuse alcaline et/ou
- contient au moins un sel du groupe formé par le nitrate d'argent, le chlorure d'argent, l'acétate d'argent, le lactate d'argent et le sulfate d'argent.

5. Procédé selon l'une quelconque des revendications précédentes, **caractérisé en ce que** le réducteur est une solution aqueuse présentant un agent réducteur et l'agent est un composé réducteur des classes de substances des aldéhydes, des sucres ou des alcools.

6. Procédé selon l'une quelconque des revendications précédentes, **caractérisé en ce qu'**il s'agit, pour le substrat, d'une pièce en matériau synthétique, en particulier d'une pièce en acrylonitrile-butadiène-styrène ou en mélange de polypropylène/caoutchouc d'éthylène-propylène-diène.

7. Procédé selon l'une quelconque des revendications précédentes, **caractérisé en ce que** la surface du substrat est nettoyée et/ou prétraitée avant l'application de l'apprêt.

8. Procédé selon l'une quelconque des revendications précédentes, **caractérisé en ce qu'**après l'application de l'apprêt, le procédé comprend au moins l'une des étapes suivantes :
a. séchage et/ou durcissement au moins partiel de l'apprêt,
b. activation de la couche d'apprêt,
c. rinçage, de préférence par de l'eau désionisée.

9. Procédé selon l'une quelconque des revendications précédentes, **caractérisé en ce qu'**après l'application de la couche métallisée en argent, le procédé comprend au moins l'une des étapes suivantes :
a. rinçage, de préférence par de l'eau désionisée,
b. séchage de la couche d'argent.

10. Système stratifié sur un substrat, qui peut être préparé selon un procédé selon l'une quelconque des revendications 1 à 9, comprenant une couche d'apprêt directement sur le substrat, une couche d'argent directement sur la couche d'apprêt et une couche de laque de recouvrement directement sur la couche d'argent, la couche d'apprêt contenant un agent de protection contre la corrosion qui est choisi dans le groupe comprenant le benzotriazole, le toluyltriazole, le benzimidazole et les mélanges de deux, ou plus, des composés mentionnés, **caractérisé en ce que** la couche de laque de recouvrement est une couche de laque de polyuréthane qui a été formée à l'aide d'un durcisseur à base de diisocyanate d'isophorone.
